Europäisches Patentamt

European Patent Office

Office européen des brevets

(19)

(11) **EP 0 507 386 B1**

(12) **FASCICULE DE BREVET EUROPEEN**

(45) Date de publication et mention
de la délivrance du brevet:
**04.09.1996 Bulletin 1996/36**

(51) Int Cl.⁶: **H04B 7/26**

(21) Numéro de dépôt: **92200863.6**

(22) Date de dépôt: **26.03.1992**

(54) **Système de transmission d'informations comportant au moins une station de base et au moins une station satellite**

Informationsübertragungssystem mit wenigstens einer Basisstation und einer sekundären Station

Information transmission system with at least one base station and one satellite station

(84) Etats contractants désignés:
**DE FR GB IT**

(30) Priorité: **02.04.1991 FR 9103949**

(43) Date de publication de la demande:
**07.10.1992 Bulletin 1992/41**

(73) Titulaires:
- **PHILIPS COMMUNICATION D'ENTREPRISE
  75013 Paris (FR)**
  Etats contractants désignés:
  **FR**
- **Philips Electronics N.V.
  5621 BA Eindhoven (NL)**
  Etats contractants désignés:
  **DE GB IT**

(72) Inventeurs:
- **Guedes, Yvon, Société Civile S.P.I.D.
  F-75008 Paris (FR)**
- **Sfez, Rémi, Société Civile S.P.I.D.
  F-75008 Paris (FR)**

(74) Mandataire: **Chaffraix, Jean et al
Société Civile S.P.I.D.
156, Boulevard Haussmann
75008 Paris (FR)**

(56) Documents cités:
**EP-A- 0 115 330          US-A- 4 222 115**

- **FREQUENZ. vol. 40, no. 9, Septembre 1986,
  BERLIN DE pages 249 - 254; U.
  LANGEWELLPOTT: 'Anwendung der
  Spead-Spectrum-Technik im Mobilfunk'**

## Description

La présente invention concerne un système de transmission d'informations comportant au moins une station de base et au moins une station satellite échangeant des informations utiles par une pluralité de multiplex temporels véhiculés respectivement au moyen d'une pluralité de porteuses, système comprenant, pour transmettre les informations utiles entre des stations :

- des moyens de répliques de l'information pour élaborer une pluralité de répliques constituées par un découpage temporel de l'information utile,
- des moyens de dispersion fréquentielle (MMF) pour émettre dans la pluralité de multiplex, la pluralité de répliques,
- des moyens de réception pour recevoir la pluralité de répliques ainsi transmises et
- des moyens de combinaison (DBF) pour rétablir les informations utiles à partir de la pluralité de répliques reçues.

L'invention concerne aussi une station satellite et une station de base convenant pour un tel système.

Un tel système trouve d'importantes applications notamment dans le domaine des radiocommunications privées.

Dans ce domaine on est confronté au problème de la parcimonie des ressources. Ce qu'on entend par ressource est la possibilité d'utiliser un plus ou moins grand nombre de canaux fréquentiels présentant des bandes passantes plus ou moins réduites. Il est bien entendu que malgré ces ressources réduites la qualité du trafic doit être aussi bonne que possible. Une cause courante de la dégradation du trafic est le fading sélectif. Une première mesure connue pour lutter contre le fading est d'utiliser des codes correcteurs d'erreurs, une deuxième mesure connue est d'utiliser des canaux fréquentiels différents pour transmettre des informations consécutives. Cette mesure est évoquée dans l'article : "Performance of Trellis Coded Modulation Using Multi-Frequency Channels in Land Mobile Communications" de Yuklyoshi KAMIO paru dans PROC. OF IEEE VEB. TECH. de Mai 1990 (CH2846-4/90/0000-455).

La présente invention propose un système de ce genre dans lequel les moyens de dispersion et de combinaison peuvent être réalisés de manière simple et économique.

Pour cela, selon un aspect de l'invention, un tel système est remarquable en ce que les moyens de dispersion fréquentielle sont constitués à partir d'une transformée inverse de Fourier rapide.

Selon un autre aspect de l'invention, un tel système est remarquable en ce que les moyens de combinaison sont constitués à partir d'une transformée directe de Fourier rapide.

La description suivante accompagnée des dessins ci-annexés, le tout donné à titre d'exemple non limitatif, fera bien comprendre comment l'invention peut être réalisée.

La figure 1 représente un système de transmission conforme à l'invention.

La figure 2a représente une structure de trame AMRT usuellement utilisée.

Les figures 2b et 2c représentent une structure de trame AMRT selon l'invention.

La figure 3 représente un schéma bloc d'une station satellite et d'une station de base.

La figure 4 représente un premier exemple d'utilisation d'un circuit de dispersion fréquentielle.

La figure 5 représente un premier exemple de réalisation d'un circuit de combinaison.

La figure 6 représente un mode de réalisation préféré d'un circuit de dispersion fréquentielle.

La figure 7 représente un mode de réalisation préféré d'un circuit de combinaison.

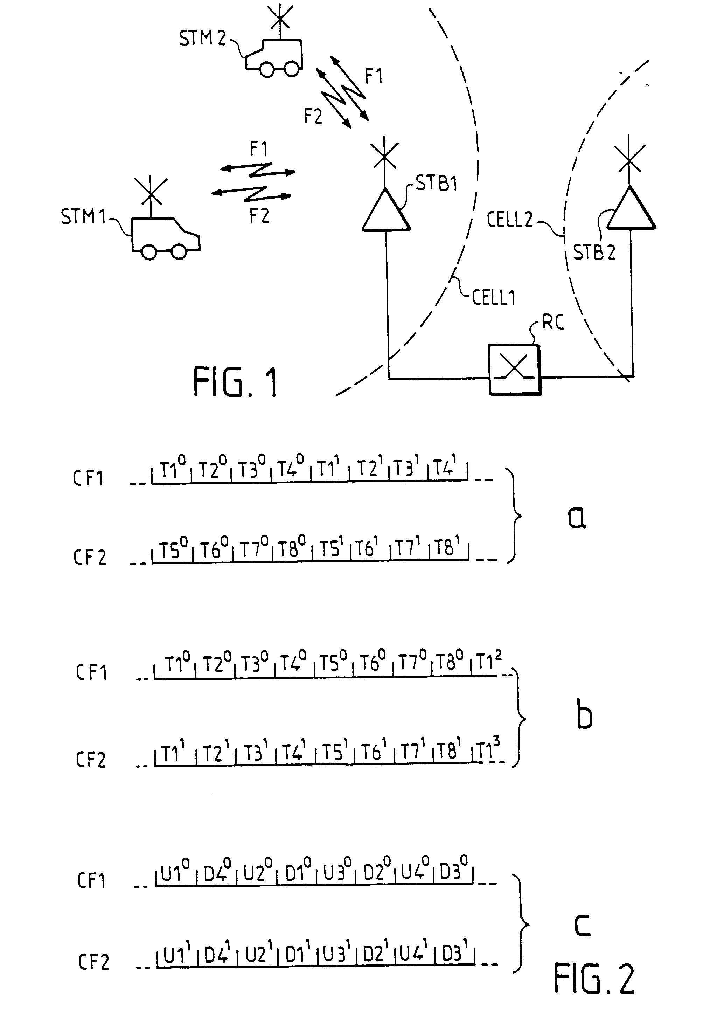

Le système représenté schématiquement à la figure 1 est formé d'une pluralité de cellules dont deux seulement CELL1 et CELL2 sont esquissées sur cette figure. Dans chaque cellule CELL1 et CELL2 est placée une station de base d'émission-réception radioélectrique STB1 et STB2 respectivement.

Différents mobiles comportant des stations satellites STM1 et STM2 peuvent se déplacer à l'intérieur de ces cellules. Un réseau de commutation RC permet d'échanger des informations entre chacune des cellules.

Toujours dans le cadre de l'exemple décrit, deux canaux fréquentiels CF1, CF2 centrés autour des fréquences porteuses F1 et F2 sont utilisés pour l'échange d'informations entre les stations satellites STM1, STM2 et la station de base STB1. Il va de soi que si le trafic le demandait, il serait toujours possible de rajouter d'autres canaux fréquentiels, sans pour cela sortir du cadre de l'invention. Ces canaux fréquentiels sont utilisés pour transmettre des multiplex temporels du type AMRT dont la figure 2a montre une organisation possible usuelle. Chaque canal fréquentiel CF1 et CF2 transporte des tranches de temps, repérées pour le premier par ..., $T1^0$, $T2^0$, $T3^0$, $T4^0$, $T1^1$, $T2^1$, $T3^1$, $T4^1$,... et pour le second par ..., $T5^0$, $T6^0$, $T7^0$, $T8^0$, $T5^1$, $T6^1$, $T7^1$, $T8^1$,... Ces références représentent les canaux temporels qui sont donc au nombre de quatre pour chacun des canaux fréquentiels, T1 à T4 pour le canal fréquentiel CF1 et T5 à T8 pour le canal fréquentiel CF2. L'exposant de chaque tranche de temps représente le numéro du paquet transporté.

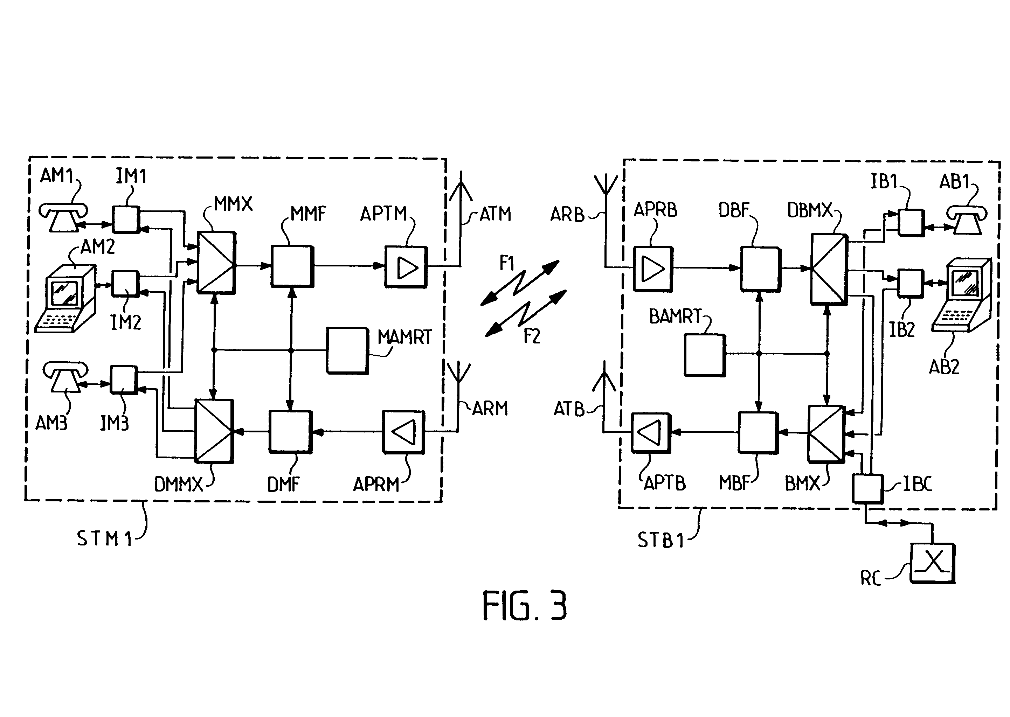

A la figure 3, on a représenté plus en détail une station satellite, par exemple la station STM1 et la station principale STB1.

A la station satellite STM1 est rattaché un certain nombre d'organes d'abonnés AM1, AM2 et AM3. AM1 et AM3 sont des combinés téléphoniques tandis que AM2 est un dispositif informatique. Les sorties des différents organes d'abonné sont reliées aux entrées d'un multiplexeur MX par l'intermédiaire de circuits d'interface IM1, IM2 et IM3 qui effectuent les opérations habituelles pour la mise en forme des signaux afin de les rendre aptes à la transmission. Les signaux issus du multiplexeur MX sont finalement transmis sur les canaux fréquentiels après traitement dans un circuit de dispersion fréquentielle MMF (dont la fonction sera précisée plus loin dans le présent exposé) après amplification apportée par un amplificateur haute fréquence APTM dont la sortie est reliée à une antenne ATM. Les ondes ainsi émises par l'antenne ATM peuvent être captées par l'antenne ARB de la station de base STB1, puis amplifiées par l'amplificateur APRB avant de subir, au moyen du circuit de combinaison DBF, le traitement inverse effectué par le circuit MMF. Les signaux sont alors démultiplexés par le démultiplexeur DBMX pour être fournis, par l'intermédiaire de circuits d'interface IB1, IB2, ..., IB6, aux abonnés AB1, AB2,... ou au réseau de commutation RC.

De la même manière la station STB1 émet en utilisant successivement un multiplexeur BMX, un circuit MBF, un amplificateur haute fréquence APTB et une antenne ATB. Aussi, la station STM1 reçoit des informations en utilisant une antenne de réception ARM, un amplificateur APRM, un circuit DMF et un démultiplexeur DMMX.

Un circuit de commande AMRT portant respectivement les références MAMRT et BAMRT commande les différents accès aux tranches de temps du multiplex, tant pour l'émission que pour la réception, en agissant sur les circuits MMX, DMMX, MMF et DMF pour le premier et BMX, DBMX, MBF et DBF pour le deuxième.

Un tel système est soumis aux problèmes suivants.

Les ondes émises sont souvent affectées au phénomène d'évanouissement et de bruits additifs, ce qui limite les performances du système. Pour lutter contre cette limitation, il a été proposé d'utiliser des codes correcteurs d'erreurs.

Ces codes réduisent d'autant plus la probabilité d'erreur que les erreurs qui se produisent sont bien décorrélées. Or la fonction d'autocorrélation des évanouissements n'est pas favorable aux codes correcteurs d'erreurs.

Il a été aussi proposé, en combinaison avec les codes correcteurs d'erreurs, d'utiliser l'entrelacement temporel qui dissémine dans le temps les différents éléments binaires constituant l'information à transmettre, de sorte que si le phénomène d'évanouissement dure un court laps de temps, peu d'éléments binaires seront affectés. Cependant, si cet entrelacement est trop profond ou trop important, il entraîne des retards qui sont inadmissibles pour un bon trafic en duplex surtout pour des échanges de paroles.

Conformément à l'invention, pour améliorer l'immunité du système aux phénomènes d'évanouissement, il a été prévu des circuits MMF et MBF qui effectuent un multiplexage en fréquence et des circuits DBF et DMF qui effectuent, en correspondance, le démultiplexage en fréquence et combinent les signaux.

Pour effectuer ce multiplexage on profite du procédé AMRT qui a été choisi pour ce système, ainsi toute communication utilisera les canaux fréquentiels CF1 et CF2 tour à tour. La figure 2b montre comment les canaux temporels sont exploités pour mettre en oeuvre l'invention sans nécessiter de ressources supplémentaires. Ainsi pour transporter deux paquets d'informations consécutifs dans un même canal temporel, les canaux fréquentiels CF1 et CF2 sont utilisés tour à tour. Ainsi la tranche de temps $T1^0$ d'un premier canal temporel qui transporte un premier paquet est véhiculée au moyen du canal fréquentiel CF1, la tranche de ce même canal temporel qui transporte le paquet suivant est véhiculée au moyen du canal CF2 et ainsi de suite et tour à tour pour les tranches de temps $T1^2$, $T1^3$, et.... Il en est de même pour les autres tranches de temps.

La figure 2c spécifie une répartition possible des canaux temporels pour les sens des transmissions ; certaines tranches de temps, par exemple $U1^0$, $U1^1$, $U2^0$, $U2^1$, $U3^0$, $U3^1$, $U4^0$, $U4^1$ sont affectées dans le sens de transmission : station satellite-station principale. La transmission en sens inverse, station de base-station satellite, utilisera les tranches de temps $D1^0$, $D1^1$, $D2^0$, $D2^1$, $D3^0$, $D3^1$, $D4^0$, $D4^1$ utilisant les canaux fréquentiels CF1 et CF2. La différence de fréquence des porteuses des canaux F1 et F2 doit être supérieure à quelques centaines de kHz. Il y a simultanéité dans le temps entre les différents canaux : $U1^0$ est simultané avec $U1^1$, $D4^0$ avec $D4^1$, etc...

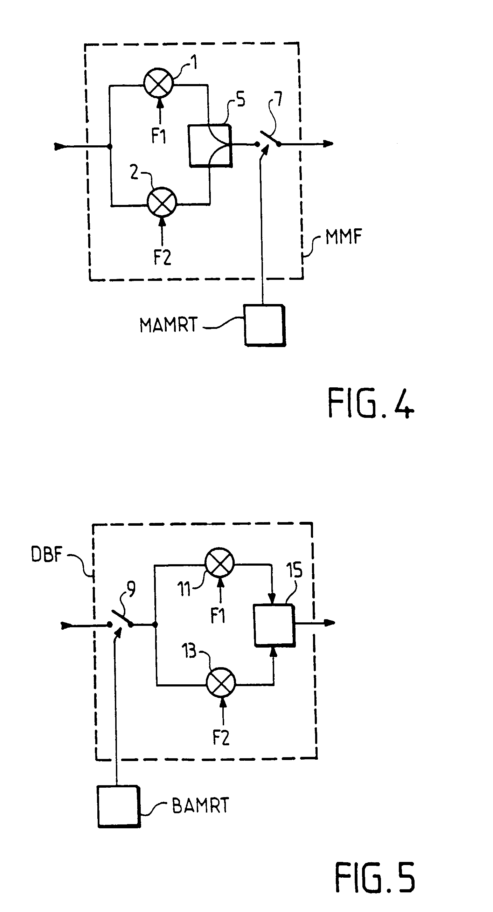

La figure 4 montre un premier exemple du circuit MMF. Les données appliquées à son entrée sont modulées par les modulateurs 1 et 2 par les fréquences porteuses F1 et F2 respectivement, un circuit de juxtaposition 5 combine les signaux modulés par 1 et 2 pour les fournir dans la bonne tranche de temps des liaisons AMRT, ceci est représenté par un interrupteur 7 commandé par le circuit MAMRT.

La figure 5 montre un premier exemple du circuit DBF. L'onde reçue est prélevée dans la bonne tranche de temps de la liaison AMRT, ceci est représenté par un interrupteur 9 commandé par le circuit BAMRT. Puis l'onde est démodulée par les démodulateurs 11 et 13 au moyen des fréquences porteuses F1 et F2, un circuit de combinaison 15 restitue les données qui sont ensuite décodées. Le fait que deux symboles de données consécutivement fournis au décodeur soient affectés d'évanouissements indépendants, ceci grâce au procédé de multiplexage-démultiplexage sur deux canaux fréquentiels suffisamment distants l'un de l'autre, rend le décodage plus robuste et réduit le taux d'erreur résiduel.

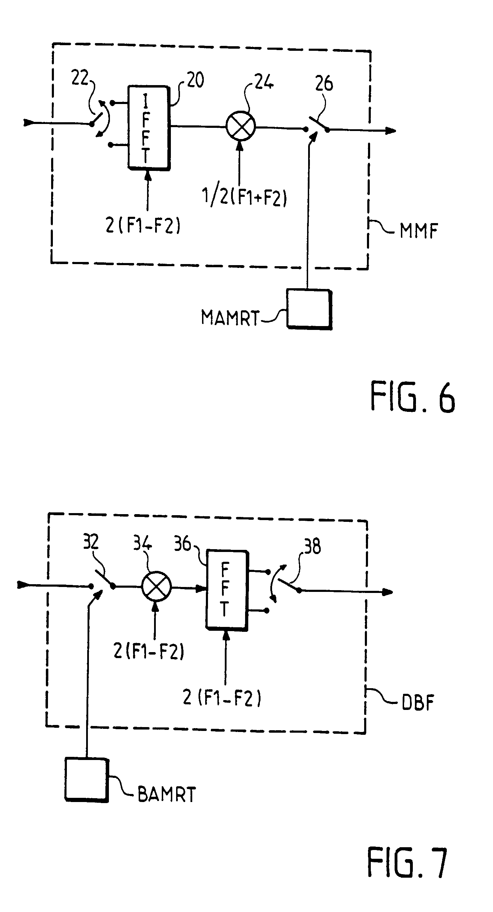

La figure 6 montre un exemple de réalisation préféré du circuit MMF.

Il se compose d'un circuit de traitement 20 opérant sur la base d'une transformée inverse de Fourier rapide. Ce circuit est muni de deux entrées dont chacune reçoit une donnée sur deux, ceci est représenté par le commutateur 22. A la sortie du circuit le signal présente un spectre avec deux composantes alignées par une fréquence d'échantillonnage égale à $2|F1-F2|$, un modulateur 24 centre ce double spectre autour d'une fréquence $F = 1/2(F1+F2)$ de sorte que les signaux à la sortie de ce modulateur peuvent être mis dans la tranche de temps des multiplex AMRT de fréquence porteuse F1 et F2. Ceci est représenté par un interrupteur 26 commandé par le circuit MAMRT.

La figure 7 montre un exemple de réalisation préféré du circuit DBF.

Dans la tranche de temps impartie à la réception, le signal présentant deux composantes de spectre centrées autour de F1 et F2 est reçu, ceci est représenté par un interrupteur 32 commandé par le circuit BAMRT. Un démodulateur 34 transforme ces signaux en signaux bande base au moyen d'un signal présentant une fréquence 2IF1-F2I, un circuit de traitement de réception 36 opérant sur la base d'une transformée de Fourier rapide fournit les données sur ces deux sorties. Ces données sont donc fournies l'une après l'autre, tour à tour sur les deux sorties, ceci est représenté par un commutateur 38.

Ainsi, grâce au mode de réalisation préféré, on se rend compte que le système conforme à l'invention ne nécessite pas de ressource supplémentaire puisque chaque tranche de temps dont le nombre peut être doublé pour la mise en oeuvre de l'invention transporte moitié moins de données.

Ainsi on peut prévoir un entrelacement de profondeur correcte qui, par un retard raisonnable, ne gêne pas trop les communications de parole et qui se combine en quelque sorte avec un entrelacement fréquentiel.

Par exemple, en supposant un débit brut de 8 kbauds, une modulation 8-PSK et un code en treillis de rendement 2/3, un temps (d'entrelacement/désentrelacement) de 100 ms, une transmission à 900 MHz, et une vitesse du mobile de 10 km/h, les simulations numériques font appraitre que l'utilisation de deux sous-porteuses permet un gain de codage de 11 dB environ.

Ainsi un système conforme à l'invention permet une évolution apportant un gain d'efficacité particulièrement significatif et cela, sans modification des plans de fréquence existants, ni les normes des équipements radio et de leur agrément, ni de la structure des trames AMRT utilisées, ni du débit par canal fréquentiel.

ANNEXE

Fonctionnement du circuit 20.

Pour plus de généralité on considère le circuit 20 comme ayant N entrées. Pour être en accord avec ce qui a été décrit, on prendra N = 2.

Soient $\{d_k, k+0... \infty\}$ la séquence des symboles codés 8-PSK en sortie du codeur, et g(t) est la fonction de mise en forme.

$$g(t) = \begin{cases} 1 & 0 \leq t < NT_s \\ 0 & ailleurs \end{cases}$$

Le signal dans chaque canal s'écrit :

$$x^0(t) = \sum_{k=0}^{\infty} d_{kN} \, g(t-kNT_s)$$

$$x^1(t) = \sum_{k=0}^{\infty} d_{kN+1} \, g(t-kNT_s)$$

$$\ldots$$

$$x^{N-1}(t) = \sum_{k=0}^{\infty} d_{kN+N-1} \, g(t-kNT_s)$$

Le signal du $i^{ème}$ canal s'écrit donc en fait :

$$x^\psi(t) = \sum_{k=0}^{\infty} d_{kN+i} \, g(t-kNT_s)$$

Chaque signal est ensuite transposé à la fréquence $f_i$, et le signal transmis est la somme de ces N signaux :

$$y(t) = \sum_{i=0}^{N-1} \sum_{k=0}^{\infty} d_{kN+i} \, g(t-kNT_s) \, e^{j2\pi f_i t}$$

En inversant les signes sommes, on obtient l'expression équivalente :

$$y(t) = \sum_{k=0}^{\infty} \sum_{i=0}^{N-1} d_{kN+i} \, e^{j2\pi f_i t} \, g(t-kNT_s)$$

On effectue ensuite un échantillonnage à la fréquence $f_e = B_{ut}$, donc on se place au temps $t = mT_e$

$$y(mT_e) = \sum_{k=0}^{\infty} \sum_{i=0}^{N-1} d_{kN+i} \; e^{j2\pi f_i mT_e} \; g(mT_e - kNT_s)$$

On a supposé d'autre part les fréquence $f_i$ équidistantes ; soit $f_i = if_e/N$ ;

$$y(mT_e) = \sum_{k=0}^{\infty} \sum_{i=0}^{N-1} d_{kN+i} \; e^{j2\pi \frac{im}{N}} \; g(mT_e - kNT_s)$$

$$y_m = \sum_{k=0}^{\infty} \{ \sum_{i=0}^{N-1} d_{kN+i} \; e^{j2\pi \frac{i\tilde{m}}{N}} \} \; g(mT_e - kNT_s)$$

où $\tilde{m} = m \bmod N$

La seconde somme n'est donc rien d'autre que la transformée de Fourier discrète inverse des points

$$\{ d_{kN+i} \}_{i=0}^{N-1}$$

pris à l'instant $\tilde{m}f_e$, $\tilde{m} = 0, N-1$.

Un raisonnement similaire pourra être fait pour le circuit DBF.

La réalisation de tels circuits pourra être faite à partir de circuits du commerce spécialisé dans ce genre de traitement.

## Revendications

1. Système de transmission d'informations comportant au moins une station de base (STB1, STB2) et au moins une station satellite (STM1, STM2,...) échangeant des informations utiles par une pluralité de multiplex temporels véhiculés respectivement au moyen d'une pluralité de porteuses (F1, F2), système comprenant, pour transmettre les informations utiles entre des stations :

   - des moyens de répliques de l'information pour élaborer une pluralité de répliques constituées par un découpage temporel de l'information utile,
   - des moyens de dispersion fréquentielle (MMF) pour émettre dans la pluralité de multiplex, la pluralité de répliques,
   - des moyens de réception pour recevoir la pluralité de répliques ainsi transmises et
   - des moyens de combinaison (DBF) pour rétablir les informations utiles à partir de la pluralité de répliques reçues,

   **caractérisé en ce que** les moyens de dispersion fréquentielle sont constitués à partir d'une transformée inverse de Fourier rapide.

2. Système de transmission d'informations selon la revendication 1, caractérisé en ce que les moyens de combinaison sont constitués à partir d'une transformée directe de Fourier rapide.

3. Système de transmission selon l'une des revendications 1 ou 2, caractérisé en ce que le multiplex est du type AMRT.

4. Station satellite convenant à un système selon l'une des revendications 1 à 3 pour laquelle il est prévu en vue de transmettre des informations utiles :

   - des moyens de répliques de l'information pour élaborer une pluralité de répliques constituées par un découpage temporel de l'information utile,
   - des moyens de dispersion fréquentielle pour émettre dans la pluralité de multiplex, la pluralité de répliques,
   - des moyens de réception pour recevoir la pluralité de répliques ainsi transmises et
   - des moyens de combinaison pour rétablir les informations utiles à partir de la pluralité de répliques reçues, **caractérisée en ce que** les moyens de dispersion fréquentielle sont constitués à partir d'une transformée inverse de Fourier rapide.

5. Station satellite selon la revendication 4, caractérisée en ce que les moyens de combinaison sont constitués à partir d'une transformée directe de Fourier rapide.

6. Station de base convenant à un système selon l'une des revendications 1 à 3 pour laquelle il est prévu en vue de transmettre des informations utiles :

   - des moyens de répliques de l'information pour élaborer une pluralité de répliques constituées par un découpage temporel de l'information utile,
   - des moyens de dispersion fréquentielle pour émettre dans la pluralité de multiplex, la pluralité de répliques,
   - des moyens de réception pour recevoir la pluralité de répliques ainsi transmises et
   - des moyens de combinaison pour rétablir les informations utiles à partir de la pluralité de répliques reçues,
   **caractérisée en ce que** les moyens de dispersion fréquentielle sont constitués à partir d'une transformée inverse de Fourier rapide.

7. Station de base selon la revendication 6, caractérisée en ce que les moyens de combinaison sont constitués à partir d'une transformée directe de Fourier rapide.

## Patentansprüche

1. Ein Informationsübertragungssystem mit wenigstens einer Basisstation (STB1, STB2) und mindestens einer sekundären Station (STM1, STM2 ), die über eine Vielzahl an Zeitmultiplexen Nutzinformationen austauschen, jeweils mit einer Vielzahl an Trägerfrequenzen (F1, F2) übertragen, wobei das System zur Übertragung der Nutzinformationen zwischen zwei Stationen folgendes beinhaltet :

   - Mittel zur Duplikation der Information zur Erzeugung einer Vielzahl an Duplikaten, zusammengestellt aus einer zeitlichen Aufteilung der Nutzinformation,
   - Mittel der Frequenzstreuung (MMF) zum Senden der Vielzahl an Duplikaten in der Vielzahl an Multiplexen,
   - Mittel für dem Empfang für den Erhalt der so übertragenen Vielzahl an Duplikaten, und
   - Mittel der Verbindung (DBF) zur Wiederherstellung der Nutzinformationen von der Vielzahl der erhaltenen Duplikate,

   mit dem Merkmal, daß die Mittel der Frequenzstreuung aus einer schnellen Fourier-Rücktransformierten gebildet werden.

2. Ein Informationsübertragungssystem laut Anspruch 1, mit dem Merkmal, daß die Mittel zur Verbindung aus einer direkten, schnellen Fouriertransformierten gebildet werden.

3. Ein Informationsübertragungssystem laut einem der Ansprüche 1 oder 2, mit dem Merkmal, daß der Multiplex vom Typ AMRT ist.

4. Eine einem System laut einem der Ansprüche 1 bis 3 entsprechende sekundäre Station, für die zur Übertragung von Nutzinformationen folgendes vorgesehen ist :

   - Mittel zur Duplikation der Information zur Erzeugung einer Vielzahl an Duplikaten, zusammengestellt aus einer zeitlichen Aufteilung der Nutzinformation,
   - Mittel der Frequenzstreuung zum Senden der Vielzahl an Duplikaten in der Vielzahl an Multiplexen,
   - Mittel für dem Empfang für den Erhalt der so übertragenen Vielzahl an Duplikaten, und
   - Mittel der Verbindung zur Wiederherstellung der Nutzinformationen von der Vielzahl der erhaltenen Duplikate,

   mit dem Merkmal, daß die Mittel zur Frequenzstreuung aus einer schnellen Fourier-Rücktransformierten gebildet werden.

5. Eine sekundäre Station laut Anspruch 4, mit dem Merkmal, daß die Mittel zur Verbindung aus einer direkten, schnellen Fouriertransformierten gebildet werden.

6. Eine einem System laut einem der Ansprüche 1 bis 3 entsprechende Basisstation, für die zur Übertragung von Nutzinformationen folgendes vorgesehen ist :

- Mittel zur Duplikation der Information zur Erzeugung einer Vielzahl an Duplikaten, zusammengestellt aus einer zeitlichen Aufteilung der Nutzinformation,
- Mittel der Frequenzstreuung zum Senden der Vielzahl an Duplikaten in der Vielzahl an Multiplexen,
- Mittel für dem Empfang für den Erhalt der so übertragenen Vielzahl an Duplikaten, und
- Mittel der Verbindung zur Wiederherstellung der Nutzinformationen von der Vielzahl der erhaltenen Duplikate,

mit dem Merkmal, daß die Mittel zur Frequenzstreuung aus einer schnellen Fourier-Rücktransformierten gebildet werden.

7. Eine Basisstation laut Anspruch 6, mit dem Merkmal, daß die Mittel zur Verbindung aus einer direkten, schnellen Fouriertransformierten gebildet werden.

## Claims

1. Information transmission system, comprising at least one base station (STB1, STB2) and at least one satellite station (STM1, STM2), exchanging payload information signals by a plurality of time multiplexed signals which are transported by a plurality of carriers (F1, F2), which system comprises for transmitting the payload information signals between the stations:.

- replica-forming means for forming a plurality of replicas by a time-dependent sub-division of the payload information
- frequency spreading means (MMF) for transmitting the plurality of replicas in the plurality of multiplexed signals,
- receiving means for receiving the thus transmitted plurality of replicas, and
- combining means (DBF) for restoring the payload information signals based on the plurality of received replicas,

characterized in that the frequency spreading means are formed from a fast inverse Fourier transform.

2. Information transmission system as claimed in Claim 1, characterized in that the combining means are formed from a fast direct Fourier transform.

3. Transmission system as claimed in any one of the Claims 1 or 2, characterized in that the multiplexing is of the TDMA type.

4. Satellite station suitable for a system as claimed in any one of the Claims 1 to 3 for which station there is provided for transmitting payload information signals:

- replica-forming means for forming a plurality of replicas by a time-dependent sub-division of the payload information
- frequency spreading means for transmitting the plurality of replicas in the plurality of multiplexed signals,
- receiving means for receiving the thus transmitted plurality of replicas, and
- combining means for restoring the payload information signals based on the plurality of received replicas,

characterized in that the frequency spreading means are formed from a fast direct Fourier transform.

5. Satellite station as claimed in Claim 4, characterized in that the combining means are formed from a fast direct Fourier transform.

6. Base station suitable for a system as claimed in one of the Claims 1 to 3, for which station there is provided for transmitting payload information signals:

- replica-forming means for forming a plurality of replicas by a time-dependent sub-division of the payload information
- frequency spreading means for transmitting the plurality of replicas in the plurality of multiplexed signals,

- receiving means for receiving the thus transmitted plurality of replicas, and
- combining means for restoring the payload information signals based on the plurality of received replicas,

characterized in that the frequency spreading means are formed from a fast inverse Fourier transform.

7. Base station as claimed in Claim 6, characterized in that the combining means are formed from a fast direct Fourier transform.

FIG. 1

CF1 __ |T1⁰|T2⁰|T3⁰|T4⁰|T1¹|T2¹|T3¹|T4¹| __

CF2 __ |T5⁰|T6⁰|T7⁰|T8⁰|T5¹|T6¹|T7¹|T8¹| __    } a

CF1 __ |T1⁰|T2⁰|T3⁰|T4⁰|T5⁰|T6⁰|T7⁰|T8⁰|T1²| __

CF2 __ |T1¹|T2¹|T3¹|T4¹|T5¹|T6¹|T7¹|T8¹|T1³| __    } b

CF1 __ |U1⁰|D4⁰|U2⁰|D1⁰|U3⁰|D2⁰|U4⁰|D3⁰| __

CF2 __ |U1¹|D4¹|U2¹|D1¹|U3¹|D2¹|U4¹|D3¹| __    } c

FIG. 2

FIG. 3

EP 0 507 386 B1

FIG.4

FIG.5

FIG. 6

FIG. 7